# EUROPEAN PATENT SPECIFICATION

(11) **EP 4 498 472 B1**
(45) Date of publication and mention of the grant of the patent: **13.08.2025**
(21) Application number: 24177258.1
(22) Date of filing: 22.05.2024
(51) Int. Cl.: H01M 10/0587, H01M 50/474, H01M 50/477

(54) **SECONDARY BATTERY**
SEKUNDÄRBATTERIE
BATTERIE SECONDAIRE

(30) Priority: 24.07.2023 KR 20230095984
(43) Date of publication of application: 29.01.2025
(73) Proprietor: Samsung SDI Co., Ltd., Yongin-si, Gyeonggi-do 17084 (KR)
(72) Inventor: Kim, Soo Hyun, Yongin-si, Gyeonggi-do 17084 (KR); Lee, Ju Hyung, Yongin-si, Gyeonggi-do 17084 (KR); Kim, Yo Seob, Yongin-si, Gyeonggi-do 17084 (KR); Kim, Shin Jung, Yongin-si, Gyeonggi-do 17084 (KR)
(74) Representative: Gulde & Partner

(56) References cited:
- CN-Y- 2 864 999
- CN-Y- 201 112 459

## Description

### BACKGROUND

### 1. Field

Aspects of some embodiments relate to a secondary battery.

### 2. Description of the Related Art

A secondary battery is a power storage system that provides excellent energy density to change electrical energy into chemical energy so as to store the chemical energy. In contrast to non-rechargeable primary batteries, secondary batteries are generally rechargeable and may be used for a variety of electronic devices such as smartphones, cellular phones, laptops, tablet PCs, and the like. Recently, interests in electric vehicles have increased to prevent or reduce environmental pollution, and thus, high-capacity secondary batteries are being adopted for the electric vehicles. Such secondary batteries may desirably have characteristics such as high density, high output, and stability. Secondary batteries known from prior art are disclosed in the documents CN 201 112 459 Y and CN 2 864 999 Y.

The above information disclosed in this Background section is only for enhancement of understanding of the background and therefore the information discussed in this Background section does not necessarily constitute prior art.

### SUMMARY

Aspects of some embodiments of the present disclosure include a secondary battery in which insulating performance and a shape of an electrode assembly are maintained through components of one insulator.

The characteristics of embodiments according to the present disclosure are not limited to the above-mentioned characteristics, and other characteristics not mentioned herein will be clearly understood by those skilled in the art from this specification and the attached drawings.

According to some embodiments, a secondary battery includes: an electrode assembly comprising a first electrode plate, a second electrode plate, and a separator between the first electrode plate and the second electrode plate; a case configured to accommodate the electrode assembly; a cap assembly electrically connected to the second electrode plate of the electrode assembly; and an insulator coupled to an upper side of the electrode assembly, wherein the insulator includes: an insulating upper portion configured to cover the upper side of the electrode assembly; an insulating side portion between the case and a side portion of the electrode assembly; and an insulating core portion inserted into a hollow portion of the electrode assembly to support the electrode assembly.

According to some embodiments, the insulating core portion may have a length greater than that of the insulating side portion.

According to some embodiments, the length of the insulating core portion may be about 5% to about 20%, preferably about 10% to about 15%, of a length of the electrode assembly.

According to some embodiments, a diameter of a lower end of the insulating core portion may be less than that of the other area of the insulating core portion.

According to some embodiments, the insulating core portion may be inclined with respect to a direction in which the electrode assembly extends.

According to some embodiments, a thickness of a lower end of the insulating core portion may be less than that of the other area of the insulating core portion.

According to some embodiments, each of the insulating side portion, the insulating upper portion, and the insulating core portion may have a thickness of about 0.1 mm to about 1 mm, preferably of about 0.25 mm to about 0.75 mm.

According to some embodiments, the insulator may further include a first hole passing between top and bottom surfaces of a center of the insulating core portion.

According to some embodiments, an end of the insulating side portion facing the electrode assembly may be chamfered.

According to some embodiments, the insulator may further include an insulating rib that may be configured to connect the insulating upper portion to the insulating core portion.

According to some embodiments, the insulating rib may have a circular plate shape that may connect an outer edge of the insulating core portion to an inner edge of the insulating upper portion.

According to some embodiments, the insulating rib may further include at least one second hole passing between top and bottom surfaces thereof.

According to some embodiments, the insulating rib may be provided in plurality, which may be spaced apart from and symmetrical to each other with respect to the insulating core portion.

According to some embodiments, a second hole passing between top and bottom surfaces may be defined between the plurality of insulating ribs and between the insulating core portion and the insulating upper portion.

According to some embodiments, the insulating core portion may further include a support protrusion that may protrude toward the electrode assembly to support the electrode assembly outside the insulating core portion.

According to some embodiments, a cutoff portion having a slit shape may be further provided in a lower end of the insulating core portion.

According to some embodiments, a cutoff portion having a slit shape may be further provided in a lower end of the insulating side portion.

According to some embodiments, the insulator may include at least one material of polybutylene terephthalate, polypropylene, polystyrene, or polyethylene.

According to some embodiments, the case may include a beading part that may be recessed along a direction, in which the electrode assembly extends, above the electrode assembly.

According to some embodiments, the insulating upper portion of the insulator may be interposed between the beading part and the electrode assembly.

According to some embodiments, the secondary battery may further include a second current collector plate that may be in contact with and electrically connected to a non-coating portion of the second electrode plate exposed to an upper side of the electrode assembly.

According to some embodiments, the secondary battery may further include a sub plate having one end that may be in contact with and electrically connected to an upper side of the second current collector plate and the other end that may be in contact with or electrically connected to a lower portion of the cap assembly by passing through the insulator.

According to some embodiments, the second current collector plate may be integrated with the insulator.

According to some embodiments, the insulating side portion of the insulator may have a length greater than that of the non-coating portion of the second electrode plate of the electrode assembly.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF THE DRAWINGS

The accompanying drawings are included to provide a further understanding of the present disclosure, and are incorporated in and constitute a part of this specification. The drawings illustrate aspects of some embodiments of the present disclosure and, together with the description, serve to explain principles of the present disclosure. In the drawings:
FIG. 1 illustrates a perspective view of a secondary battery according to some embodiments;
FIG. 2 illustrates a cross-sectional view of the secondary battery of FIG. 1, taken along the line II-II of FIG. 1;
FIG. 3 illustrates an exploded perspective view of the secondary battery according to some embodiments;
FIG. 4 illustrates a cross-sectional view of a portion of the secondary battery so as to show a structure of an insulator according to some embodiments;
FIG. 5A illustrates a plan view of the insulator including an example of an insulating rib, FIG. 5B illustrates a cross-sectional view of the insulator of FIG. 5A, taken along the line A-A' of FIG. 5A, and FIG. 5C illustrates a side view of the insulator of FIG. 5A when viewed from the side;
FIG. 6A illustrates a plan view of the insulator including another example of the insulating rib, FIG. 6B illustrates a cross-sectional view of the insulator of FIG. 6A, taken along the line B-B' of FIG. 6A, and FIG. 6C illustrates a side view of the insulator of FIG. 6A when viewed from the side;
FIG. 7A illustrates a plan view of the insulator including further another example of an insulating rib, FIG. 7B illustrates a cross-sectional view of the insulator of FIG. 7A, taken along the line C-C' of FIG. 7A, and FIG. 7C illustrates a side view of the insulator of FIG. 7A when viewed from the side;
FIG. 8A illustrates a plan view of the insulator including a support protrusion, FIG. 8B illustrates a cross-sectional view of the insulator of FIG. 8A, taken along the line DDA' of FIG. 8A, and FIG. 8C illustrates a side view of the insulator of FIG. 8A when viewed from the side;
FIG. 9A illustrates a plan view of the insulator including an insulating core portion, FIG. 9B illustrates a cross-sectional view of the insulator of FIG. 9A, taken along the line E-E' of FIG. 9A, and FIG. 9C illustrates a side view of the insulator of FIG. 9A when viewed from the side; and
FIG. 10A illustrates a plan view of the insulator including a cutoff portion of an insulating side portion, FIG. 10B illustrates a cross-sectional view of the insulator of FIG. 10A, taken along the line F-F' of FIG. 10A, and FIG. 10C illustrates a side view of the insulator of FIG. 10A when viewed from the side.

### DETAILED DESCRIPTION

Embodiments of the present disclosure may, however, be embodied in many different forms and should not be construed as being limited to the embodiments set forth herein; rather, these embodiments are provided so that those skilled in the art thoroughly understand the present disclosure. Rather, these embodiments are provided so that this disclosure will be thorough and complete, and will fully convey the scope of the present disclosure to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present disclosure is not limited thereto. For example, an element or feature shown in the drawings is turned inside out, the element or feature described as "beneath" or "below" may change into "above" or "upper". Thus the term "below" may encompass the term "above" or "below".

Hereinafter, aspects of some embodiments of the present disclosure will be described in more detail with reference to the accompanying drawings.

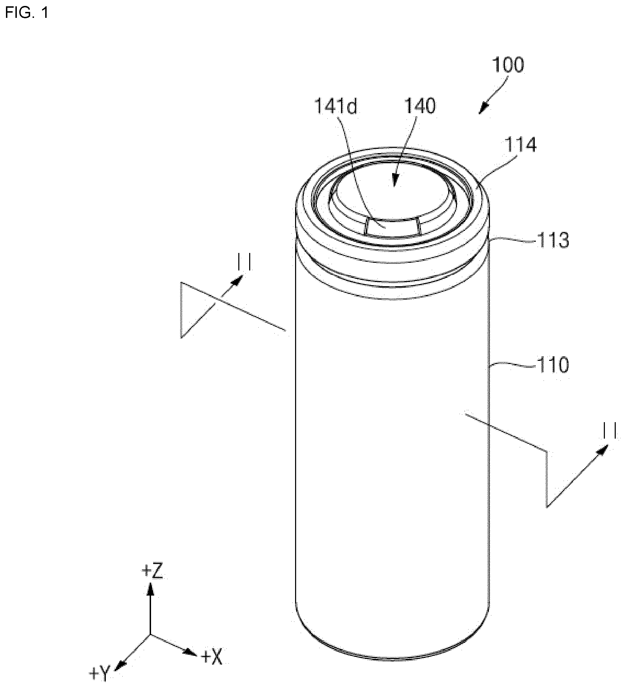

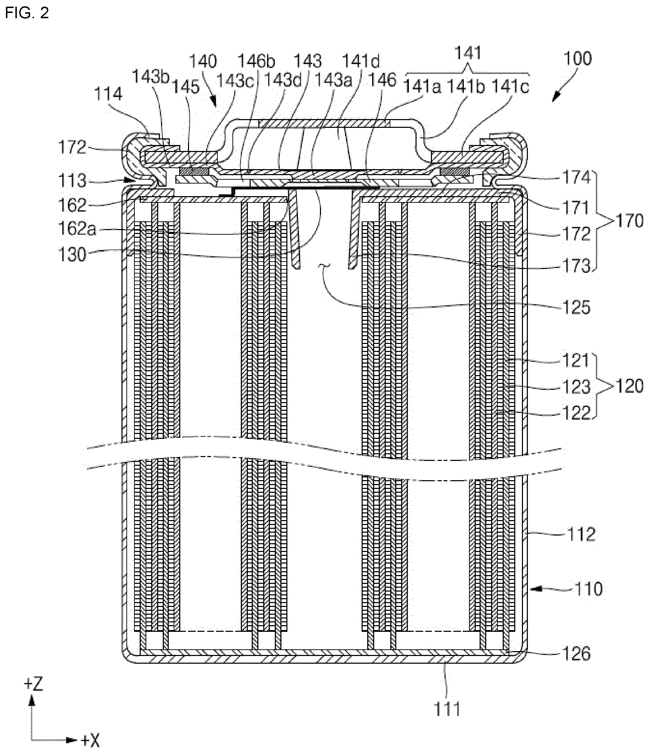

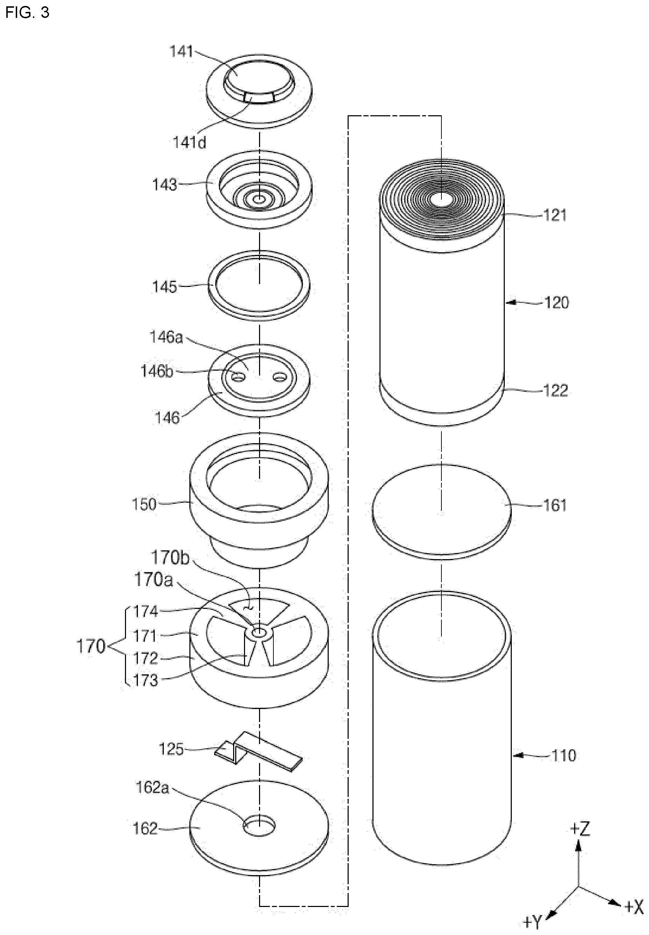

FIG. 1 illustrates a perspective view of a secondary battery according to some embodiments, FIG. 2 illustrates a cross-sectional view of the secondary battery of FIG. 1, taken along the line II-II of FIG. 1, and FIG. 3 illustrates an exploded perspective view of the secondary battery according to some embodiments.

Referring to FIGS. 1 to 3, a secondary battery 100 according to some embodiments may include a case 110, an electrode assembly 120, a sub plate 130, a cap assembly 140, an insulating gasket 150, a current collector plate 160, and an insulator 170. However, the components of the secondary battery 100 are not limited thereto, and other components may be added, or at least one component may be omitted depending on the embodiments.

The case 110 may accommodate an electrolyte therein. The case 110 may function as a main body of the secondary battery 100 to accommodate the electrode assembly 120, the cap assembly 140, the insulating gasket 150, a current collector plate 160, and insulator 170 along with the electrolyte. The case 110 may be provided in a cylindrical shape, but the shape is not limited thereto. According to some embodiments, the case 110 may be made of steel, a steel alloy, aluminum, an aluminum alloy, or an equivalent thereof, but the material thereof is not limited thereto.

The electrolyte may be injected into the case 110 to serve so that lithium ions generated by electrochemical reaction in a first electrode plate 121 and a second electrode plate 122 inside the battery during charging and discharging are movable. The electrolyte may be a non-aqueous organic electrolyte that is a mixture of lithium salt and a high-purity organic solvent. Furthermore, the electrolyte may be a polymer using a polymer electrolyte or a solid electrolyte, and the type of the electrolyte is not limited here.

The case 110 may include a bottom portion 111 and a side portion 112.

The bottom portion 111 may be a bottom surface of the case 110 facing a lower side (e.g., -z direction). The bottom portion 111 may be provided in an overall circular shape.

The side portion 112 may extend from the bottom portion 111 to a certain length along a first direction (e.g., z-axis direction). The side portion 112 may be a sidewall of the case 110, which surrounds the electrode assembly 120. The first direction may be a direction parallel to a direction in which a height of the secondary battery 100 increases (e.g., +z direction) or a direction in which the height of the secondary battery 100 decreases (e.g., -z direction).

According to some embodiments, during the process of manufacturing the secondary battery 100, an upper portion (e.g., portion facing the +z direction) of the case 110 may be opened so that the electrode assembly 120 is injected into the case together with the electrolyte during the process of assembling the electrode assembly 120. According to some embodiments, the cap assembly 140, the insulating gasket 150, the current collector plate 160, and the insulator 170 may also be inserted into the case 110.

The case 110 may further include a beading part 113 and a crimping part 114.

The beading part 113 may be provided by inserting the electrode assembly 120 into the case 110 and then pressing the electrode assembly 120 in a second direction (e.g., x-axis direction) crossing the first direction. The beading part 113 may prevent the electrode assembly 120 from being separated from the case 110. The beading part 113 may be recessed toward a central portion of the case 110. In a state in which the cap assembly 140 is located at an upper portion (e.g., portion facing +z direction), an edge area of the cap assembly 140 may be seated on the beading part 113.

In the present disclosure, the "central portion" of the component may mean a portion that is equally spaced apart from both surfaces of the component. For example, a center of the case 110 may mean a central portion of the case 110, which is equally spaced apart from the side portions 112.

The crimping part 114 may be located above the beading part 113 to extend in the second direction. In a state in which the cap assembly 140 is located at the upper portion (e.g., portion facing +z direction), the edge area of the cap assembly 140 may be located below the crimping part 114. According to some embodiments, the crimping part 114 may press and fix the edge of the cap assembly 114 to seal the inside of the case 110. According to some embodiments, the edge area of the cap assembly 140 may be interposed between the beading part 113 and the crimping part 114. According to some embodiments, the insulating gasket 150 for electrical insulation may be further interposed between the cap assembly 140 and the case 110.

The electrode assembly 120 is accommodated in the case 110 together with the electrolyte.

The electrode assembly 120 may include the first electrode plate 121, the second electrode plate 122, and a separator 123. According to some embodiments, the first electrode plate 121 may be a negative electrode plate, and the second electrode plate 122 may be a positive electrode plate.

The first electrode plate 121 may be coated with a negative electrode active material such as graphite or carbon on at least one surface of plate-shaped metal foil made of copper (Cu) or nickel (Ni). According to some embodiments, the first electrode plate 121 may be provided with a negative electrode non-coating portion that is not coated with the negative electrode active material on a lower end (e.g., portion facing -z direction) thereof. The negative electrode non-coating portion may protrude in a downward direction (e.g., -z direction) of the electrode assembly 120. According to some embodiments, the negative electrode non-coating portion may further protrude downward than the second electrode plate 122 and the separator 123.

In the second electrode plate 122, at least one surface of plate-shaped metal foil made of aluminum (Al) is applied to a positive electrode active material made of transition metal oxide. According to some embodiments, the second electrode plate 122 may be provided with a positive electrode non-coating portion that is not coated with a positive electrode active material on an upper end (e.g., portion facing +z direction) thereof. The positive electrode non-coating portion may protrude in an upward direction (e.g., +z direction) of the electrode assembly 120. According to some embodiments, the positive electrode non-coating portion of the second electrode plate 122 may further protrude upward than the first electrode plate 121 and the separator 123.

The separator may be located between the first electrode plate 121 and the second electrode plate 122 to prevent the first electrode plate 121 and the second electrode plate 122 from being electrically short-circuited with each other and to enable lithium ions to move only. The separator 123 may be made of polyethylene or polypropylene, but the embodiments according to the present disclosure are not limited thereto.

The electrode assembly 120 may be wound from a winding front end in a substantially cylindrical shape after the first electrode plate 121, the second electrode plate 122, and the separator 123 are stacked. According to some embodiments, in the electrode assembly 120, the negative electrode non-coating portion that is not coated with the negative electrode active material may protrude downward from the first electrode plate 121, and the positive electrode non-coating portion that is not coated with the positive electrode active material may protrude upward from the second electrode plate 122.

The electrode assembly 120 may be provided with a hollow portion 125 in a core. According to some embodiments, the hollow portion 125 may serve to allow the electrolyte to quickly flow into the electrode assembly 120 during a process of injecting the electrolyte. According to some embodiments, the hollow portion 125 may serve as a passage through which a gas and/or heat generated inside the secondary battery 100 move to the outside.

The sub plate 130 may be electrically connected to the current collector plate 160. According to some embodiments, the sub plate 130 may be electrically connected to the second current collector plate 162, which will be described in more detail later. The sub plate 130 may be made of a separate metal plate and may be welded to the top surface of the second current collector plate 162. The sub plate 130 may be aluminum or an aluminum alloy.

The cap assembly 140 may be coupled to the upper portion (e.g., portion facing the +z direction) of the case 110. If the cap assembly 140 is coupled to the upper portion of the case 110, the cap assembly 140 may cover the upper portion of the electrode assembly 120.

The cap assembly 140 may include a cap-up 141 having a plurality of openings 141d, a safety plate 143 installed below the cap-up 141, a connection ring 145 installed below the safety plate 143, and a cap-down 146 coupled to the connection ring 145 and having a gas discharge hole 146b. The above-described sub plate 130 may be coupled to the cap-down 146.

The components of the cap assembly 140 are not limited thereto, and other components may be added, or at least one component may be omitted depending on the embodiments.

One area of the cap-up 141 may be provided to be convex upward (e.g., in the +z direction) and may be electrically connected to an external circuit. According to some embodiments, the cap-up 141 may be provided with an opening 141d that provides a path through which the gas generated inside the case 110 is discharged to the outside. The cap-up 141 may be electrically connected to the second electrode plate 122 of the electrode assembly 120 through the sub plate 130, the cap-down 146, and the safety plate 143. The cap-up 141 may be a positive electrode terminal.

The cap-up 141 may include a terminal part 141a, a connection part 141b, and an extension part 141c, which are sequentially arranged outward from the center.

The terminal part 141a may be flat (or approximately flat) and may be located at a substantially center of the cap-up 141. According to some embodiments, when the terminal part 141a connects a plurality of secondary batteries 100 in series or in parallel to form a module, a positive electrode pack tab for connecting the plurality of secondary batteries 100 to each other is welded on a top surface of the terminal part 141a.

The connection part 141b is provided by being bent downward from an edge of the terminal part 141a and includes at least one opening 141d. The opening 141d may discharge the gas inside the case 110 to the outside if a vent part 143d of the safety plate 143 is broken.

According to some embodiments, the extension part 141c may extend outward from a lower end of the connection part 141b in a horizontal direction. An edge surface 141cc of the extension part 141c may be surrounded by the safety plate 143. According to some embodiments, the bottom surface of the extension part 141c and a portion of the top surface of the extension part 141c may be in contact with the safety plate 143. According to some embodiments, the edge surface may be a surface connecting the bottom surface to the top surface of the extension part.

The cap-up 141 may be made of any one selected from general aluminum, an aluminum alloy, steel, a steel alloy, nickel, a nickel alloy, and equivalents thereof, and the material thereof is not limited in the present invention.

The safety plate 143 may include a central area 143a and an edge area 143b extending outward from the central area 143a and having an end interposed between the beading part 113 and the crimping part 114 of the case 110 so as to be coupled to the case 110. The center area 143a may be concave toward the inside of the case 110 compared to the edge area 143b. According to some embodiments, the safety plate 143 may be provided with a stepped portion because the edge area 143b is located higher than the central area 143a. The safety plate 143 may further include a connection area 143c connecting the center area 143a to the edge area 143b. The connection area 143c may be provided to be inclined.

The edge area 143b of the safety plate 143 may be arranged to be in close contact with one area (e.g., an outer circumference) of the cap-up 141. According to some embodiments, the edge area 143b of the safety plate 143 may be bent and extend in the first direction and the second direction to surround one area (e.g., the outer circumference) of the cap-up 141 and may be in contact with the one area of the cap-up 141. According to some embodiments, the edge of the safety plate 143 may surround the cap-up 141 and extend to an upper side of the cap-up 141 to cover a top surface of the cap-up 141.

The safety plate 143 may include a vent part 143d.

The vent part 143d may be provided in the central area 143a and may be opened by a preset breaking pressure. According to some embodiments, the preset breaking pressure may be about 25 kgf/cm² to about 50 kgf/cm², preferably about 30 kgf/cm² to about 45 kgf/cm².

The vent part 143d may be a notch provided downward from a top surface of the central area 143a of the safety plate 143. One area of the safety plate 143 in which the vent part 143d is provided may be thinner than the other area of the safety plate 143 in which the vent part 143d is not provided. According to some embodiments, the vent part 143d may be provided to have a ring shape in a plane (or in a plan view). The vent part 143d may be provided on the top surface of the safety plate 143 through pressing and forging processes.

If ignition occurs in the electrode assembly 120, the vent part 143d may be broken to discharge a gas and heat generated during combustion, thereby reducing a risk of rupture. The vent part 143d may be spaced apart from the connection area 143c. A thickness of the vent part 143d may be about 0.15 mm to about 0.2 mm. According to some embodiments, the thickness of the vent part 143d may be a thickness from the lowest point of the notch to the bottom surface of the safety plate 143. If the vent part 143d located in the central area 143a of the safety plate 143 is broken, the gas and heat may be more easily discharged due to an increase in breakage area, thereby preventing thermal runaway and rupture.

According to the secondary battery 100 according to some embodiments, if a temperature of the cell increases due to an event, or an internal pressure of the case 110 exceeds an operating pressure of the safety plate 143, the vent part 143d may be broken by the preset breakage pressure to disperse the internal pressure due to heat exposure through the vent part 143d, thereby preventing the rupture from occurring. According to some embodiments, the secondary battery 100 according to some embodiments may relatively improve safety in use by providing the vent part 143d.

The safety plate 143 may function to block electric current and discharge the internal gas if an abnormal internal pressure occurs inside the case 110.

The safety plate 143 may be provided as a circular metal plate and be coupled to the cap-up 141 and then to an upper end of the case 110. The safety plate 143 coupled to the cap-up 141 may seal the opening in the upper end of the case 110. In the process of assembling the secondary battery 100, the electrolyte and the electrode assembly 120 may be inserted through the opening of the case 110, and then, the safety plate 143 coupled to the cap-up 141 may be coupled to the opened upper end to seal the case 110.

The safety plate 143 may be coupled to the upper end of the case 110 in a state in which the second gasket 150 is interposed to be prevented to electrically connected to the case 110. The safety plate 143 may be electrically connected to the second electrode plate of the electrode assembly 120 through the cap-down 146 and the sub plate 130. The safety plate 143 may be made of aluminum, an aluminum alloy, or equivalent. The safety plate 143 may be provided as a metal plate and have a thickness of about 0.7 mm to about 1.2 mm.

A connection ring 145 may be located between the safety plate 143 and the cap-down 146 to insulate edges of the safety plate 143 and the cap-down 146 from each other. According to some embodiments, the connection ring 145 may be located between an outer circumference of the safety plate 143 and an outer circumference of the cap-down 146. The connection ring 145 may be made of a resin material such as polyethylene, polypropylene, or polyethylene terephthalate.

The cap-down 146 may be connected to a bottom surface (e.g., surface facing the -z direction) of the connection ring 145. The cap-down 146 may be provided as a circular plate. A center of the top surface of the cap-down 146 may be in contact with and welded to a bottom surface of the central area 143a of the safety plate 143 (which, e.g., may provide a safety vent). A thickness of the center of the cap-down 146 may be thinner than that of each of other areas. The cap-down 146 may be provided with a notch or arc-shaped hole along the outer circumference of the center on the plane.

If the internal pressure of the case 110 increases due to the notch or hole of the cap-down 146, the central area and the edge area may be separated from each other. According to some embodiments, the cap-down 146 may be reversed upward in the state in which the central portion is in contact with the safety plate 143 (which, e.g., may provide a safety vent), and thus, the central portion and the edge area may be separated from each other so as to be electrically separated from the safety plate 143 (which, e.g., may provide a safety vent). A gas discharge hole 146b may be defined at one side of the cap-down 146. A sub plate 130 may be located below the cap-down 146. The gas discharge hole 146b may serve to discharge the internal gas if an excessive internal pressure is generated in the case 110, e.g., formed as a cylindrical can or housing. According to some embodiments, the vent part 143d of the safety plate 143 may be damaged by the gas discharged through the gas discharge hole 146b, and as a result, the gas may be discharged to the outside of the secondary battery 100.

The insulating gasket 150 may function to insulate the cap assembly 140 from the side portion 112 of the case 110.

The insulating gasket 150 may be installed in the upper opening of the case 110. According to some embodiments, the insulating gasket 150 may be substantially arranged between the beading part 113, which is provided on the side portion of the case 110, and the crimping part 114. For example, the insulating gasket 150 may be in the compressed form of the beading part 113 and the crimping part 114. According to some embodiments, the insulating gasket 150 may be assembled to be in close contact between the extension part 141c of the cap-up 141, the edge area 143b of the safety plate 143, and the upper end of the case 110. Here, the cap-up 141 coupled to the safety plate 143 may be fixed to the upper end of the case 110 in the state in which the insulating gasket 150 is interposed by the crimping part 114 located on the upper end of the case 110.

The insulating gasket 150 may be made of a resin material such as polyethylene, polypropylene, polyethylene terephthalate, or the like. The insulating gasket 150 may prevent the cap assembly 140 from being separated from case 110.

The current collector plate 160 may include a first current collector plate 161 and a second current collector plate 162. The first current collector plate 161 may be in contact with and electrically connected to the first electrode plate 121, and the second current collector plate 162 may be in contact with and electrically connected to the second electrode plate 122.

The first current collector plate 161 may be provided as a circular metal plate that has a shape corresponding to the bottom surface (e.g., surface facing the -z direction) of the electrode assembly 120. A planar size of the first current collector plate 161 may be equal to or less than a size of the bottom surface of the electrode assembly 120.

The first current collector plate 161 may be fixed and electrically connected to the first electrode plate 121 exposed to the lower side of the electrode assembly 120 through welding in the state in which the top surface of the first current collector plate 161 is in contact with the bottom surface of the electrode assembly 120. The first current collector plate 161 may be fixed and electrically connected to a bottom portion 111 by welding in a state in which a bottom surface of the first current collector plate 161 is in contact with the bottom portion 111 of the case 110. The first current collector plate 161 may serve as a path for the current flow between the first electrode plate 121 of the electrode assembly 120 and the case 110.

The second current collector plate 162 may be electrically connected to the second electrode plate 122. The second current collector plate 162 may be provided as a circular metal plate that has a shape corresponding to the top surface (e.g., surface facing the +z direction) of the electrode assembly 120.

The bottom surface of the second current collector plate 162 may be in contact with the top surface of the electrode assembly 120. The second current collector plate 162 may be fixed and electrically connected to the second electrode plate 122 exposed to the upper side of the electrode assembly 120.

The insulator 170 may be interposed between the electrode assembly 120 and the cap assembly 140 and between the electrode assembly 120 and the case 110. The insulator 170 may be coupled to the electrode assembly 120 at an upper side of the second current collector plate 162.

According to some embodiments, the insulator 170 may be integrated with the second current collector plate 162 by injection molding or assembly. For example, the second current collector plate 162 may be in close contact with and fixed to a lower portion of the insulator 170. According to some embodiments, a portion of the edge area of the second current collector plate 162 may be surrounded by the insulating upper portion 171 of the insulator 170. According to some embodiments, a portion of the upper area of the second current collector plate 162 may be exposed to an upper side of the insulator 170.

The insulator 170 may insulate the second current collector plate 162 and the case 110 from each other and insulate the second electrode plate 122 of the electrode assembly 120 and the case 110 from each other. The insulator 170 may include an appropriate material to perform an insulating function. The insulator 170 may include at least one of polybutylene terephthalate, polypropylene, polystyrene, or polyethylene. However, the material of the insulator 170 is not limited thereto and may include other materials as long as the material performs the insulating function.

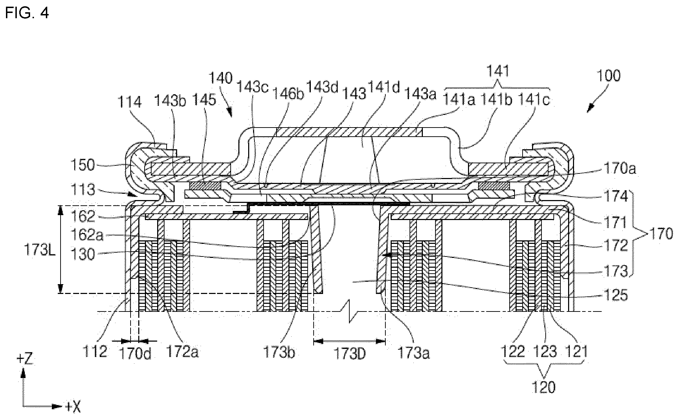

A structure of the insulator 170 may be illustrated in FIG. 4, and the structure of the insulator 170 will be described below with reference to FIG. 4. The insulator 170 may include an insulating upper portion 171, an insulating side portion 172, and an insulating core portion 173. The insulator 170 may further include an insulating rib 174. The insulator 170 may further include a first hole 170a and a second hole 170b.

The insulating upper portion 171 may be located between the second current collector plate 162 and the beading part 113 of the case 110. The insulating upper portion 171 may prevent the second current collector plate 162 and the beading part 113 from being in contact with each other. The insulating upper portion 171 may have a circular ring shape covering the edge area of the second current collector plate 162.

The insulating side portion 172 may be located between the side portion 112 of the case 110 and the electrode assembly 120. The insulating side portion 172 may extend downward from an outer circumference of the insulating upper portion 171. The insulating side portion 172 may be integrated with the insulating upper portion 171. According to some embodiments, the insulating side portion 172 may cover a portion of an upper side of the sidewall of the electrode assembly 120. According to some embodiments, a length of the insulating side portion 172 in the first direction (z) may be less than that of the electrode assembly 120. The length of the insulating side portion 172 may be greater than that of the non-coating portion of the second electrode plate 122, which protrudes upward from the electrode assembly 120.

The insulating side portion 172 may insulate the side portion 112 of the case 110 and the second electrode plate 122 of the electrode assembly 120 from each other and may insulate the side portion 112 of the case 110 and the second current collector plate 162 from each other. The insulating side portion 172 may entirely surround an upper sidewall of the electrode assembly 120. The insulating side portion 172 may be interposed between the side portion 112 of the case 110 and the electrode assembly 120. According to some embodiments, a diameter of the insulating side portion 172 may be less than an inner diameter of the side portion 112 of the case 110 and greater than an outer diameter of the electrode assembly 120.

The insulating core portion 173 may be inserted into the hollow portion 125 of the electrode assembly 120 to support the core of the electrode assembly 120. The insulating core portion 173 may have a first hole 170a extending downward from a top surface thereof. Because the insulating core portion 173 has the first hole 170a, the electrolyte may be smoothly introduced into the electrode assembly 120 during the process of injecting the electrolyte into the electrode assembly 120. According to some embodiments, the insulating core portion 173 may support the shape of the core of the electrode assembly 120 to be maintained.

The insulating core portion 173 may be located inside the insulating upper portion 171 and the insulating side portion 172 on the plane. According to some embodiments, the insulating core portion 173 may be provided to extend downward from approximately the center of the insulator 170 on the plane. The insulating core portion 173 may further protrude downward (e.g., -z direction) than the insulating side portion 172. The insulating core portion 173 may have an overall hollow cylindrical shape. The insulating core portion 173 may have a smaller diameter at a lower side compared to a diameter at an upper side thereof. According to some embodiments, the insulating core portion 173 may have a smaller diameter and be inclined toward the lower side compared to the upper side thereof. According to some embodiments, the insulating core portion 173 may have a uniform thickness. As another example, a diameter of the insulating core portion 173 may be smaller by chamfering a lower outer surface thereof. This insulating core portion 173 may be easily inserted into the hollow portion 125 of the electrode assembly 120.

According to some embodiments, a size of an end 173a of the insulating core portion 173 may be less than that of an intermediate portion 173b of the insulating core portion 173. According to some embodiments, the insulating core portion 173 may be easily inserted into the hollow portion 125. For example, a diameter of the end 173a of the insulating core portion 173 may be less than that of the intermediate portion 173b of the insulating core portion 173.

The insulating core portion 173 may be arranged to be inclined with respect to the first direction (+z direction) in which the case 110 extends. According to some embodiments, the insulating core portion 173 may gradually decrease in size along a direction from the second current collector plate 162 toward the electrode assembly 120. For example, a diameter 173D of the insulating core portion 173 may gradually decrease toward the lower side (e.g., -z direction). According to some embodiments, the secondary battery 100 according to some embodiments may have a structure in which the insulating core portion 173 is easily inserted into the hollow portion 125.

The insulating core portion 173 may be inserted into an opening 162a of the second current collector plate 162. The diameter 173D of the insulating core portion 173 may be less than that of the opening 162a of the second current collector plate 162.

The insulating rib 174 may connect the insulating upper portion 171 to the insulating core portion 173. The insulating rib 174 may have a uniform thickness with the insulating upper portion 171. The insulating rib 174 may be interposed between the cap assembly 140 and the second current collector plate 162. All of the insulating rib 174, the insulating core portion 173, the insulating side portion 172, and the insulating upper portion 171 may be provided in one body. The insulating rib 174 may be provided in plurality to be symmetrical to each other on the plane with the insulating core portion 173 as the center.

According to some embodiments, a second hole 170b may be provided between adjacent insulating ribs 174. The sub plate 130 may pass through the insulator 170 through the second hole 170b to electrically connect the second current collector plate 162 to the cap-down 146. For example, one end of the sub plate 130 may be in contact with and coupled to the top surface of the second current collector plate 162, and the other end may be in contact with and coupled to the bottom surface of the cap-down 146 through the insulator 170. The second hole 170b may be defined at the upper side of the insulator 170. For example, the second hole 170b may be defined between the insulating upper portion 171 and the insulating core portion 173 and between the plurality of insulating ribs 174.

The insulator 170 may maintain a shape of the hollow portion 125 of the electrode assembly 120 while insulating the case 110 and the second current collector plate 162 from each other and insulating the case 110 and the second electrode plate 122 of the electrode assembly 120 from each other. That is, the secondary battery 100 may be implemented with a structure that is capable of maintaining the insulation performance and the shape of the electrode assembly 120 through the components of one insulator 170. According to some embodiments, productivity of the secondary battery 100 may be relatively improved by reducing the number of manufacturing components and manufacturing processes.

The end 172a of the insulating side portion 172 may be chamfered. For example, the end 172a of the insulating side portion 172 may gradually decrease in thickness toward the lower side (e.g., -z direction). According to some embodiments, the insulator 170 may be easily inserted between the side portion 112 of the case 110 and the electrode assembly 120 through the end 172a of the insulating side portion 172.

The thickness 170d of the insulator 170 may be about 0.1 mm to about 1 mm. According to some embodiments, the secondary battery 100 may ensure the insulating function, relatively improve ease of the manufacturing process, and achieve miniaturization.

If the thickness 170d of the insulator 170 is less than about 0.1 mm, the insulator 170 may be difficult to be manufactured to a uniform thickness because the thickness is too thin during the manufacturing, and thus, the insulating performance may be deteriorated, and shape deformation or distortion may occur.

If the thickness 170d of the insulator 170 exceeds about 1 mm, capacity of the electrode assembly 120 inserted into the same case 110 may be reduced due to the unnecessary increase in size. According to some embodiments, in the insulator 170, each of the insulating upper portion 171, the insulating side portion 172, the insulating core portion 173, and the insulating rib 174 may have a thickness of about 0.1 mm to about 1 mm.

According to some embodiments, a length 173L of the insulating core portion 173 may be about 5% to about 20% of the length of the electrode assembly 120. If the length 173L of the insulating core portion 173 exceeds about 20% of the length of the electrode assembly 120, it may not be easy to insert the insulating core portion 173 into the hollow portion 125. If the length 173L of the insulating core portion 173 is less than about 5% of the length of the electrode assembly 120, it may be difficult to prevent the hollow portion 125 from collapsing.

In the secondary battery 100, because the length 173L of the insulating core portion 173 is about 5% to about 20% of the length of the electrode assembly 120, the shape of the electrode assembly 120 may be easily maintained, and the insulating core portion 173 may be easily inserted into the hollow portion 125.

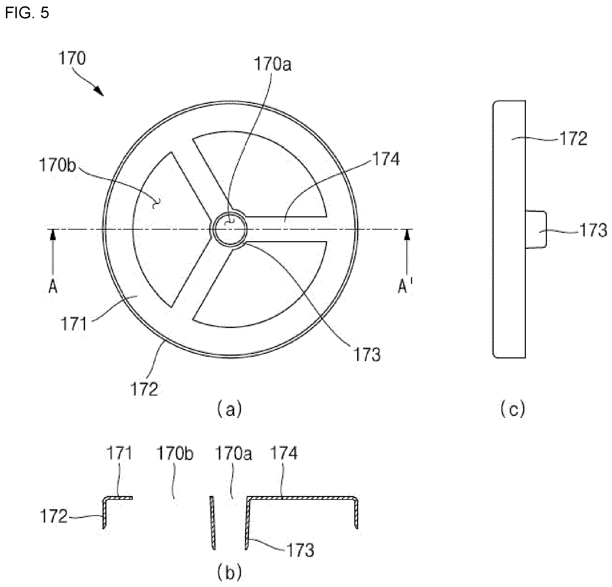

Hereinafter, various embodiments of the insulator 170 will be sequentially described with reference to FIGS. 5 to 10.

FIG. 5A illustrates a plan view of the insulator including an example of an insulating rib, FIG. 5B illustrates a cross-sectional view of the insulator of FIG. 5A, taken along the line A-A' of FIG. 5A, and FIG. 5C illustrates a side view of the insulator of FIG. 5A when viewed from the side.

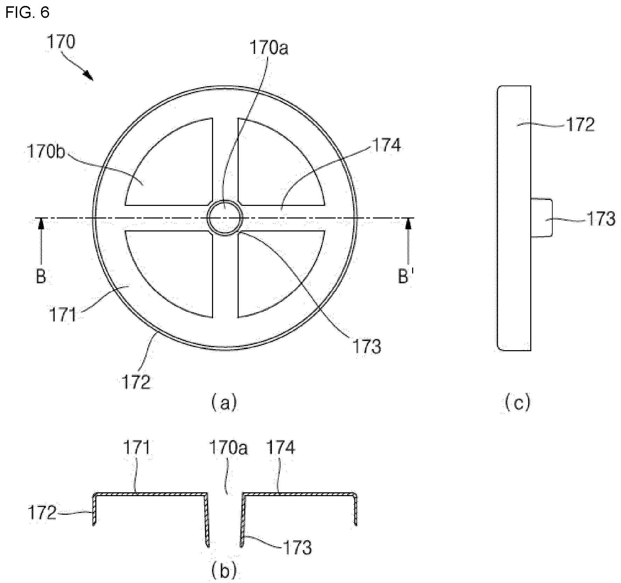

FIG. 6A illustrates a plan view of the insulator including another example of the insulating rib, FIG. 6B illustrates a cross-sectional view of the insulator of FIG. 6A, taken along the line B-B' of FIG. 6A, and FIG. 6C illustrates a side view of the insulator of FIG. 6A when viewed from the side.

Referring to FIGS. 5A to 6C, the insulator 170 may include an insulating upper portion 171, an insulating side portion 172, an insulating core portion 173, an insulating rib 174, a first hole 170a, and a second hole 170b. At least one of the components of the insulator 170 illustrated in FIGS. 5A to 6C may be the same as or similar to at least one (e.g., insulating upper portion) of the components of the insulator 170 illustrated in FIGS. 2 to 4, and thus, some description of the same or similar elements may be omitted below.

N (N is a natural number of 2 or more) number of insulating ribs 174 may be arranged along a circumferential direction of the insulating core portion 173. Three insulating ribs 174 are illustrated in FIGS. 5A to 5C, and four insulating ribs 174 are illustrated in FIGS. 6A to 6C.

According to the secondary battery 100 according to some embodiments, a plurality of insulating ribs 174 may be arranged to be spaced apart from each other, and thus, sufficient support force connecting the insulating upper portion 171 to the insulating core portion 173 may be secured, and a second hole 170b through which a sub plate 130 passes may be defined in a space between the insulating ribs 174 spaced apart from each other. According to some embodiments, the secondary battery 100 may relatively improve a supporting force between the insulating upper portion 171 and the insulating core portion 173 and provide a second hole 170b having a compact structure.

In a process of manufacturing the secondary battery 100 according to some embodiments, in a state in which the insulator 170 is coupled to the electrode assembly 120, the insulator 170 and the electrode assembly 120 may be inserted together in the case 110. According to some embodiments, in the state in which the electrode assembly 120 inserted into the case 110, the insulator 170 may be coupled between the electrode assembly 120 and the case 110.

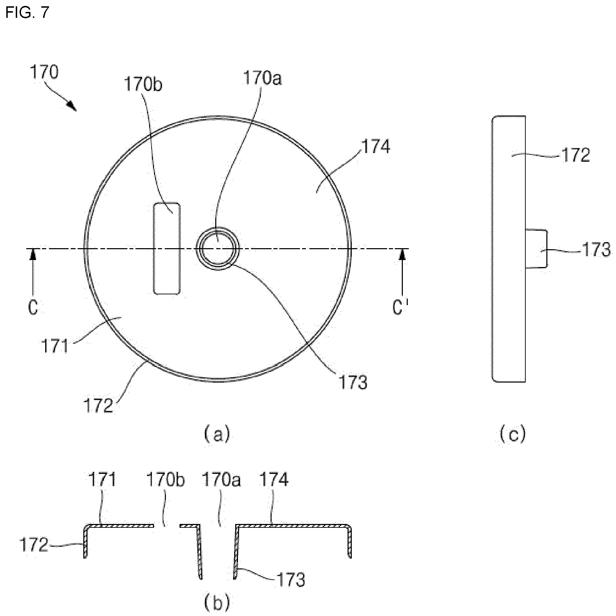

FIG. 7A illustrates a plan view of the insulator including further another example of an insulating rib, FIG. 7B illustrates a cross-sectional view of the insulator of FIG. 7A, taken along the line C-C' of FIG. 7A, and FIG. 7C illustrates a side view of the insulator of FIG. 7A when viewed from the side;
Referring to FIGS. 7A to 7C, the insulator 170 includes an insulating upper portion 171, an insulating side portion 172, an insulating core portion 173, an insulating rib 174, and a first hole 170a, and a second hole 170b. At least one of the components of the insulator 170 illustrated in FIGS. 7A to 7C may be the same as or similar to at least one (e.g., insulating upper portion) of the components of the insulator 170 illustrated in FIGS. 2 to 4, and thus, some description of the same or similar elements may be omitted below.

The insulating rib 174 may be arranged to surround the entire inside of the insulating upper portion 171 and the entire outside of the insulating core portion 173. According to some embodiments, the insulating rib 174 may extend from an inner edge of the insulating upper portion 171 to an upper outer edge of the insulating core portion 173. This insulating rib 174 may be referred to as a portion of the insulating upper portion 171. That is, the insulating upper portion 171 and the insulating rib 174 may have one circular plate shape connecting an upper end of the insulating core portion 173 to an upper end of the insulating side portion 172. According to some embodiments, a second hole 170b through which a sub plate passes may be defined in the insulating rib 174.

In the secondary battery 100, the insulating rib 174 may be connected to the insulating upper portion 171 and a front surface of the insulating core portion 173 to increase in area between the insulating upper portion 171 and the insulating core portion 173. According to some embodiments, the supporting force connecting the insulating upper portion 171 to the insulating core portion 173 may be relatively improved. According to some embodiments, the secondary battery 100 may relatively improve the supporting force between the insulating upper portion 171 and the insulating core portion 173 and provide the second hole 170b having a compact structure.

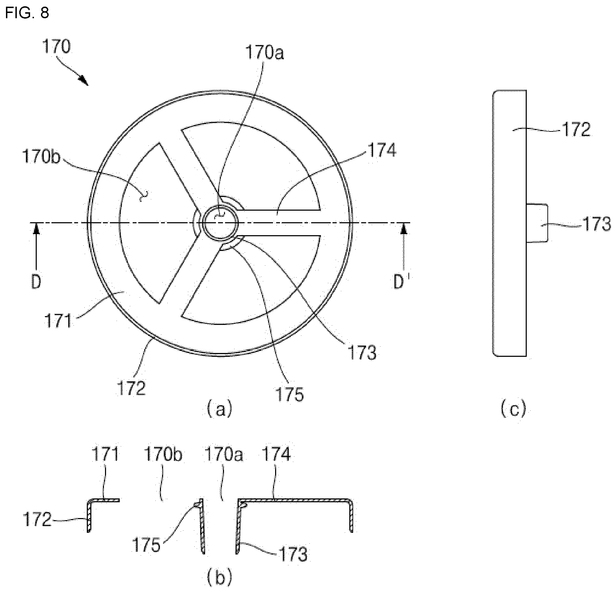

FIG. 8A illustrates a plan view of the insulator including a support protrusion, FIG. 8B illustrates a cross-sectional view of the insulator of FIG. 8A, taken along the line DDA' of FIG. 8A, and FIG. 8C illustrates a side view of the insulator of FIG. 8A when viewed from the side.

Referring to FIGS. 8A to 8C, the insulator 170 may include an insulating upper portion 171, an insulating side portion 172, an insulating core portion 173, an insulating rib 174, a support protrusion 175, a first hole 170a, and a second hole 170b. At least one of the components of the insulator 170 illustrated in FIGS. 8A to 8C may be the same as or similar to at least one (e.g., insulating upper portion) of the components of the insulator 170 illustrated in FIGS. 2 to 7C, and thus, some description of the same or similar elements may be omitted below.

The support protrusion 175 may protrude toward the electrode assembly 120 to support the electrode assembly 120. According to some embodiments, the support protrusion 175 may protrude from the insulating core portion 173 toward the electrode assembly 120 to support the electrode assembly 120. According to some embodiments, the support protrusion 175 may be integrated with the insulating core portion 173.

The support protrusion 175 of the insulating core portion 173 may support the electrode assembly 120 within a hollow portion 125 to prevent the insulator 170 from being separated from the electrode assembly 120. According to some embodiments, coupling force between the insulator 170 and the electrode assembly 120 may be relatively improved through the support protrusion 175 of the insulator 170.

The support protrusion 175 may be provided along an outer surface of the insulating core portion 173 in a circular ring shape or a plurality of arc shapes spaced apart from each other, but the shape is not limited thereto.

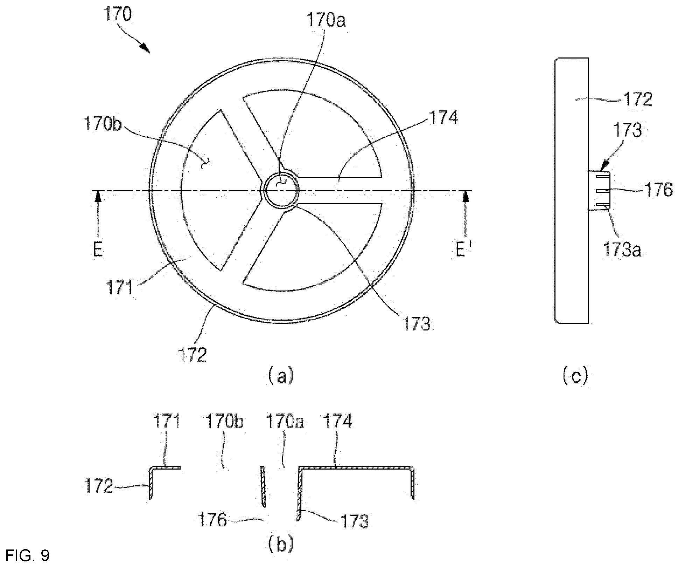

FIG. 9A illustrates a plan view of the insulator including an insulating core portion, FIG. 9B illustrates a cross-sectional view of the insulator of FIG. 9A, taken along the line E-E' of FIG. 9A, and FIG. 9C illustrates a side view of the insulator of FIG. 9A when viewed from the side.

Referring to FIGS. 9A to 9C, the insulator 170 may include an insulating upper portion 171, an insulating side portion 172, an insulating core portion 173, an insulating rib 174 of an insulating core portion 173, a cutoff portion of the insulating core portion 173, a first hole 170a, and a second hole 170b. At least one of the components of the insulator 170 illustrated in FIGS. 9A to 9C may be the same as or similar to at least one (e.g., insulating upper portion) of the components of the insulator 170 illustrated in FIGS. 2 to 8C, and thus, some description of the same or similar elements may be omitted below.

The cutoff portion 176 of the insulating core portion 173 may be located on one area of the insulating core portion 173 facing the electrode assembly 120. Due to the cutoff portion 176, an area occupied by the insulating core portion 173 may be reduced. The cutoff portion 176 may be located in a lower end 173a of the insulating core portion 173. The cut portion 176 may be in the form of a slit defined along the first direction (e.g., z-axis direction) in the insulating core portion 173.

Because the area of the insulating core portion 173 is reduced through the cutoff portion 176, the insulating core portion 173 may be easily inserted into a hollow. According to some embodiments, ease of assembly between the insulator 170 and the electrode assembly 120 may be relatively improved.

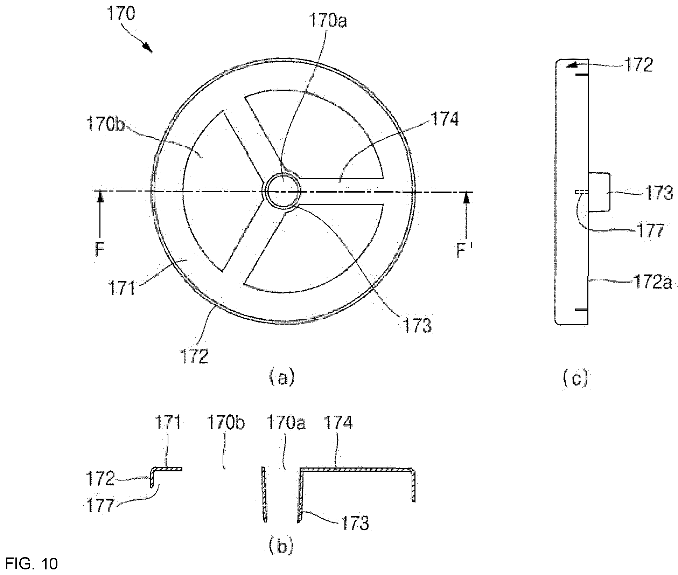

FIG. 10A illustrates a plan view of the insulator including a cutoff portion of an insulating side portion, FIG. 10B illustrates a cross-sectional view of the insulator of FIG. 10A, taken along the line F-F' of FIG. 10A, and FIG. 10C illustrates a side view of the insulator of FIG. 10A when viewed from the side.

Referring to FIGS. 8A to 8C, the insulator 170 may include an insulating upper portion 171, an insulating side portion 172, an insulating core portion 173, an insulating rib 174, a cutoff portion 177 of the insulating side portion 172, a first hole 170a, and a second hole 170b. At least one of the components of the insulator 170 illustrated in FIGS. 10A to 10C may be the same as or similar to at least one (e.g., insulating upper portion) of the components of the insulator 170 illustrated in FIGS. 2 to 9C, and thus, some description of the same or similar elements may be omitted below.

The cutoff portion 177 of the insulating side portion 172 may be located in an area of the insulating side portion 172 facing the electrode assembly. Due to the cutoff portion 177, an area occupied by the insulating side portion 172 may be reduced. The cutoff portion 177 may be provided in a lower end 172a of the insulating side portion 172. The cutoff portion 177 may be in the form of a slit defined along the first direction (e.g., z-axis direction) in the lower end 172a of the insulating side portion 172.

According to the secondary battery 100 according to some embodiments, a surface area of the insulating side portion 172 may be reduced through the cutoff portion 177, and thus, the insulating side portion 172 may be easily inserted between the side portion of the case and the electrode assembly. According to some embodiments, ease of assembly between the insulator 170 and the electrode assembly may be relatively improved.

A secondary battery according to various embodiments of the present disclosure may have the structure in which the insulating performance and the shape of the electrode assembly are maintained through the components of the one insulator to reduce the number of components of the secondary battery and the number of manufacturing processes, thereby relatively improving the productivity and securing the integrity of the secondary battery.

The characteristics of embodiments according to the present disclosure are not limited to the characteristics mentioned above, and other characteristics not mentioned will be more clearly understood by those skilled in the art from the description below.

The description of the above-described embodiments is merely illustrative, and those skilled in the art will understand that various modifications and equivalent other embodiments are possible therefrom. Therefore, the true scope of protection of the invention is defined by the appended claims.

## Claims

1. A secondary battery (100) comprising:
an electrode assembly (120) comprising:
a first electrode plate (121);
a second electrode plate (122); and
a separator (123) between the first electrode plate (121) and the second electrode plate (122);
a case (110) configured to accommodate the electrode assembly (120);
a cap assembly (140) electrically connected to the second electrode plate (122) of the electrode assembly (120); and
an insulator (170) coupled to an upper side of the electrode assembly (120),
wherein the insulator (170) comprises:
an insulating upper portion (171) configured to cover the upper side of the electrode assembly (120);
an insulating side portion (172) between the case (110) and a side portion (112) of the electrode assembly (120); and
an insulating core portion (173) inserted into a hollow portion (125) of the electrode assembly (120) to support the electrode assembly (120).

2. The secondary battery (100) as claimed in claim 1, wherein
the insulating core portion (173) has a length (173L) greater than that of the insulating side portion (172); and/or
a length (173L) of the insulating core portion (173) is in a range of 5% to 20% of a length of the electrode assembly (120).

3. The secondary battery (100) as claimed in claim 1 or 2, wherein
a diameter (173D) of a lower end (173a) of the insulating core portion (173) is less than that of the other area of the insulating core portion (173); and/or
the insulating core portion (173) is inclined with respect to a direction in which the electrode assembly (120) extends.

4. The secondary battery (100) as claimed in any one of the preceding claims, wherein
a thickness of a lower end (173a) of the insulating core portion (173) is less than a thickness of the other area of the insulating core portion (173); and/or
each of the insulating side portion (172), the insulating upper portion (171), and the insulating core portion (173) has a thickness in a range of 0.1 millimeters to 1 millimeters.

5. The secondary battery (100) as claimed in any one of the preceding claims, wherein the insulator (170) further comprises a first hole (170a) passing between top and bottom surfaces of a center of the insulating core portion (173).

6. The secondary battery (100) as claimed in any one of the preceding claims, wherein the insulator (170) further comprises an insulating rib (174) configured to connect the insulating upper portion (171) to the insulating core portion (173).

7. The secondary battery (100) as claimed in claim 6, wherein the insulating rib (174) has a circular plate shape that connects an outer edge of the insulating core portion (173) to an inner edge of the insulating upper portion (171).

8. The secondary battery (100) as claimed in claim 6 or 7, wherein
the insulating rib (174) further comprises at least one second hole (170b) passing between top and bottom surfaces thereof; or
a second hole (170b) passing between top and bottom surfaces is defined between the plurality of insulating ribs (174) and between the insulating core portion (173) and the insulating upper portion (171).

9. The secondary battery (100) as claimed in any one of claims 6 to 8, wherein the insulating rib (174) is provided in plurality, which are spaced apart from and symmetrical to each other with respect to the insulating core portion (173).

10. The secondary battery (100) as claimed in any one of the preceding claims, wherein the insulating core portion (173) further comprises a support protrusion (175) protruding toward the electrode assembly (120) to support the electrode assembly (120) outside the insulating core portion (173).

11. The secondary battery (100) as claimed in any one of the preceding claims, wherein a cutoff portion (177) having a slit shape is further provided in a lower end (172a, 173a) of the insulating side portion (172) or the insulating core portion (173).

12. The secondary battery (100) as claimed in any one of the preceding claims, wherein the case (110) comprises a beading part (113) recessed along a direction, in which the electrode assembly (120) extends, above the electrode assembly (120), wherein the insulating upper portion (171) of the insulator (170) is interposed between the beading part (113) and the electrode assembly (120).

13. The secondary battery (100) as claimed in any one of the preceding claims, further comprising a second current collector plate (162) that is in contact with and electrically connected to a non-coating portion (176) of the second electrode plate (122) exposed to an upper side of the electrode assembly (120).

14. The secondary battery (100) as claimed in claim 13, further comprising a sub plate (130) having one end that is in contact with and electrically connected to an upper side of the second current collector plate (162) and the other end that is in contact with and electrically connected to a lower portion (176) of the cap assembly (140) by passing through the insulator (170).

15. The secondary battery (100) as claimed in claim 13 or 14, wherein the insulating side portion (172) of the insulator (170) has a length (173L) greater than a length (173L) of the non-coating portion (176) of the second electrode plate (122) of the electrode assembly (120).

## Patentansprüche

1. Sekundärbatterie (100), umfassend:
eine Elektrodenanordnung (120), umfassend:
eine erste Elektrodenplatte (121);
eine zweite Elektrodenplatte (122); und
einen Separator (123) zwischen der ersten Elektrodenplatte (121) und der zweiten Elektrodenplatte (122);
ein Gehäuse (110), das dazu ausgestaltet ist, die Elektrodenanordnung (120) aufzunehmen;
eine Kappenanordnung (140), die elektrisch mit der zweiten Elektrodenplatte (122) der Elektrodenanordnung (120) verbunden ist; und
einen Isolator (170), der mit einer Oberseite der Elektrodenanordnung (120) gekoppelt ist,
wobei der Isolator (170) umfasst:
einen isolierenden oberen Abschnitt (171), der dazu ausgestaltet ist, die Oberseite der Elektrodenanordnung (120) abzudecken;
einen isolierenden Seitenabschnitt (172) zwischen dem Gehäuse (110) und einem Seitenabschnitt (112) der Elektrodenanordnung (120); und
einen isolierenden Kernabschnitt (173), der in einen hohlen Abschnitt (125) der Elektrodenanordnung (120) eingesetzt ist, um die Elektrodenanordnung (120) zu stützen.

2. Sekundärbatterie (100) nach Anspruch 1, wobei
der isolierende Kernabschnitt (173) eine Länge (173L) aufweist, die größer ist als die des isolierenden Seitenabschnitts (172); und/oder
eine Länge (173L) des isolierenden Kernabschnitts (173) in einem Bereich von 5 % bis 20 % einer Länge der Elektrodenanordnung (120) liegt.

3. Sekundärbatterie (100) nach Anspruch 1 oder 2, wobei
ein Durchmesser (173D) eines unteren Endes (173a) des isolierenden Kernabschnitts (173) kleiner ist als der des anderen Bereichs des isolierenden Kernabschnitts (173); und/oder
der isolierende Kernabschnitt (173) in Bezug auf eine Richtung, in der sich die Elektrodenanordnung (120) erstreckt, geneigt ist.

4. Sekundärbatterie (100) nach einem der vorangehenden Ansprüche, wobei
eine Dicke eines unteren Endes (173a) des isolierenden Kernabschnitts (173) geringer ist als eine Dicke des anderen Bereichs des isolierenden Kernabschnitts (173); und/oder
jeder von dem isolierenden Seitenabschnitt (172), dem isolierenden oberen Abschnitt (171) und dem isolierenden Kernabschnitt (173) eine Dicke in einem Bereich von 0,1 Millimetern bis 1 Millimeter aufweist.

5. Sekundärbatterie (100) nach einem der vorangehenden Ansprüche,
wobei der Isolator (170) ferner ein erstes Loch (170a) umfasst, das zwischen einer oberen und einer unteren Fläche einer Mitte des isolierenden Kernabschnitts (173) hindurchgeht.

6. Sekundärbatterie (100) nach einem der vorangehenden Ansprüche,
wobei der Isolator (170) ferner eine Isolierrippe (174) umfasst, die dazu ausgestaltet ist, den isolierenden oberen Abschnitt (171) mit dem isolierenden Kernabschnitt (173) zu verbinden.

7. Sekundärbatterie (100) nach Anspruch 6, wobei
die Isolierrippe (174) eine kreisförmige Plattenform aufweist, die einen äußeren Rand des isolierenden Kernabschnitts (173) mit einem inneren Rand des isolierenden oberen Abschnitts (171) verbindet.

8. Sekundärbatterie (100) nach Anspruch 6 oder 7, wobei
die Isolierrippe (174) ferner mindestens ein zweites Loch (170b) umfasst, das zwischen ihrer oberen und unteren Fläche hindurchgeht; oder
ein zweites Loch (170b), das zwischen der oberen und der unteren Fläche hindurchgeht, zwischen der Mehrzahl von Isolierrippen (174) und zwischen dem isolierenden Kernabschnitt (173) und dem isolierenden oberen Abschnitt (171) definiert ist.

9. Sekundärbatterie (100) nach einem der Ansprüche 6 bis 8, wobei die Isolierrippe (174) in einer Mehrzahl vorgesehen ist, die voneinander beabstandet und symmetrisch zueinander in Bezug auf den isolierenden Kernabschnitt (173) angeordnet sind.

10. Sekundärbatterie (100) nach einem der vorangehenden Ansprüche, wobei der isolierende Kernabschnitt (173) ferner einen Stützvorsprung (175) umfasst, der in Richtung der Elektrodenanordnung (120) vorsteht, um die Elektrodenanordnung (120) außerhalb des isolierenden Kernabschnitts (173) zu stützen.

11. Sekundärbatterie (100) nach einem der vorangehenden Ansprüche, wobei ein Trennabschnitt (177) mit einer Schlitzform ferner in einem unteren Ende (172a, 173a) des isolierenden Seitenabschnitts (172) oder des isolierenden Kernabschnitts (173) vorgesehen ist.

12. Sekundärbatterie (100) nach einem der vorangehenden Ansprüche, wobei das Gehäuse (110) einen Wulstteil (113) umfasst, der entlang einer Richtung, in der sich die Elektrodenanordnung (120) erstreckt, über der Elektrodenanordnung (120) vertieft ist, wobei der isolierende obere Abschnitt (171) des Isolators (170) zwischen dem Wulstteil (113) und der Elektrodenanordnung (120) angeordnet ist.

13. Sekundärbatterie (100) nach einem der vorangehenden Ansprüche, ferner umfassend eine zweite Stromsammelplatte (162), die mit einem nicht beschichteten Abschnitt (176) der zweiten Elektrodenplatte (122), der zu einer Oberseite der Elektrodenanordnung (120) hin freiliegt, in Kontakt steht und elektrisch mit diesem verbunden ist.

14. Sekundärbatterie (100) nach Anspruch 13, ferner umfassend eine Unterplatte (130) mit einem Ende, das mit einer Oberseite der zweiten Stromsammelplatte (162) in Kontakt steht und elektrisch mit dieser verbunden ist, und einem anderen Ende, das mit einem unteren Abschnitt (176) der Kappenanordnung (140) in Kontakt steht und elektrisch mit diesem verbunden ist, indem es durch den Isolator (170) hindurchgeht.

15. Sekundärbatterie (100) nach Anspruch 13 oder 14, wobei der isolierende Seitenabschnitt (172) des Isolators (170) eine Länge (173L) aufweist, die größer ist als eine Länge (173L) des nicht beschichteten Abschnitts (176) der zweiten Elektrodenplatte (122) der Elektrodenanordnung (120).

## Revendications

1. Batterie secondaire (100) comportant :
un ensemble électrode (120) comportant :
une première plaque d'électrode (121) ;
une deuxième plaque d'électrode (122) ; et
un séparateur (123) entre la première plaque d'électrode (121) et la deuxième plaque d'électrode (122) ;
un boîtier (110) configuré pour accueillir l'ensemble électrode (120) ;
un ensemble capuchon (140) connecté électriquement à la deuxième plaque d'électrode (122) de l'ensemble électrode (120) ; et
un isolant (170) couplé à un côté supérieur de l'ensemble électrode (120),
dans laquelle l'isolant (170) comporte :
une partie supérieure isolante (171) configurée pour recouvrir le côté supérieur de l'ensemble électrode (120) ;
une partie latérale isolante (172) entre le boîtier (110) et une partie latérale (112) de l'ensemble électrode (120) ; et
une partie centrale isolante (173) insérée dans une partie creuse (125) de l'ensemble électrode (120) pour supporter l'ensemble électrode (120).

2. Batterie secondaire (100) selon la revendication 1, dans laquelle
la partie centrale isolante (173) a une longueur (173L) supérieure à celle de la partie latérale isolante (172) ; et/ou
une longueur (173L) de la partie centrale isolante (173) est dans une plage de 5 % à 20 % d'une longueur de l'ensemble électrode (120).

3. Batterie secondaire (100) selon la revendication 1 ou 2, dans laquelle
un diamètre (173D) d'une extrémité inférieure (173a) de la partie centrale isolante (173) est inférieur à celui de l'autre zone de la partie centrale isolante (173) ; et/ou
la partie centrale isolante (173) est inclinée par rapport à une direction dans laquelle l'ensemble électrode (120) s'étend.

4. Batterie secondaire (100) selon l'une quelconque des revendications précédentes, dans laquelle
une épaisseur d'une extrémité inférieure (173a) de la partie centrale isolante (173) est inférieure à une épaisseur de l'autre zone de la partie centrale isolante (173) ; et/ou
chacune de la partie latérale isolante (172), de la partie supérieure isolante (171) et de la partie centrale isolante (173) a une épaisseur dans une plage de 0,1 millimètre à 1 millimètre.

5. Batterie secondaire (100) selon l'une quelconque des revendications précédentes, dans laquelle l'isolant (170) comporte en outre un premier trou (170a) passant entre des surfaces supérieure et inférieure d'un centre de la partie centrale isolante (173).

6. Batterie secondaire (100) selon l'une quelconque des revendications précédentes, dans laquelle l'isolant (170) comporte en outre une nervure isolante (174) configurée pour relier la partie supérieure isolante (171) à la partie centrale isolante (173).

7. Batterie secondaire (100) selon la revendication 6, dans laquelle la nervure isolante (174) présente une forme de plaque circulaire qui relie un bord extérieur de la partie centrale isolante (173) à un bord intérieur de la partie supérieure isolante (171).

8. Batterie secondaire (100) selon la revendication 6 ou 7, dans laquelle
la nervure isolante (174) comporte en outre au moins un deuxième trou (170b) passant entre ses surfaces supérieure et inférieure ; ou
un deuxième trou (170b) passant entre des surfaces supérieure et inférieure est défini entre la pluralité de nervures isolantes (174) et entre la partie centrale isolante (173) et la partie supérieure isolante (171).

9. Batterie secondaire (100) selon l'une quelconque des revendications 6 à 8, dans laquelle la nervure isolante (174) est fournie en une pluralité, qui sont espacées les unes des autres et symétriques entre elles par rapport à la partie centrale isolante (173).

10. Batterie secondaire (100) selon l'une quelconque des revendications précédentes, dans laquelle la partie centrale isolante (173) comporte en outre une saillie de support (175) faisant saillie vers l'ensemble électrode (120) pour supporter l'ensemble électrode (120) à l'extérieur de la partie centrale isolante (173).

11. Batterie secondaire (100) selon l'une quelconque des revendications précédentes, dans laquelle une partie de coupure (177) ayant une forme de fente est en outre prévue dans une extrémité inférieure (172a, 173a) de la partie latérale isolante (172) ou de la partie centrale isolante (173).

12. Batterie secondaire (100) selon l'une quelconque des revendications précédentes, dans laquelle le boîtier (110) comporte une partie bourrelet (113) en retrait le long d'une direction, dans laquelle l'ensemble électrode (120) s'étend, au-dessus de l'ensemble électrode (120), dans laquelle la partie supérieure isolante (171) de l'isolant (170) est interposée entre la partie bourrelet (113) et l'ensemble électrode (120).

13. Batterie secondaire (100) selon l'une quelconque des revendications précédentes, comportant en outre une deuxième plaque collectrice de courant (162) qui est en contact avec une partie non revêtue (176) de la deuxième plaque d'électrode (122) exposée à un côté supérieur de l'ensemble électrode (120) et connectée électriquement à celle-ci.

14. Batterie secondaire (100) selon la revendication 13, comportant en outre une sous-plaque (130) ayant une extrémité qui est en contact avec un côté supérieur de la deuxième plaque collectrice de courant (162) et connectée électriquement à celui-ci et l'autre extrémité qui est en contact avec une partie inférieure (176) de l'ensemble capuchon (140) et connectée électriquement à celle-ci par passage à travers l'isolant (170).

15. Batterie secondaire (100) selon la revendication 13 ou 14, dans laquelle la partie latérale isolante (172) de l'isolant (170) a une longueur (173L) supérieure à une longueur (173L) de la partie non revêtue (176) de la deuxième plaque d'électrode (122) de l'ensemble électrode (120).
